# EUROPÄISCHE PATENTSCHRIFT

(11) **EP 0 835 733 B1**
(45) Veröffentlichungstag und Bekanntmachung des Hinweises auf die Patenterteilung: **11.07.2001**
(21) Anmeldenummer: 97250291.8
(22) Anmeldetag: 25.09.1997
(51) Int. Cl.: B29C 45/66, B29C 45/17

(54) **Spritzgiessmaschine mit einer Werkzeugschliesseinrichtung**
Injection moulding machine with a tool closing mechanism
Presse d'injection avec un dispositif de fermeture

(30) Priorität: 09.10.1996 DE 19643366
(43) Veröffentlichungstag der Anmeldung: 15.04.1998
(73) Patentinhaber: Demag-Ergotech GmbH, 90571 Schwaig (DE)
(72) Erfinder: Würl, Ernst, 91798 Höttingen (DE); Schreiner, Helmut, Dipl.-Ing., 90411 Nürnberg (DE)
(74) Vertreter: Presting, Hans-Joachim, Dipl.-Ing.

(56) Entgegenhaltungen:
- EP-A- 0 554 068
- DE-A- 1 704 064
- DE-U- 29 513 862
- GB-A- 2 012 206

## Beschreibung

Die Erfindung betrifft eine Spritzgießmaschine mit einer Werkzeugschließeinheit, die eine feste und eine von einem Kniehebel getriebene und bewegbare Werkzeugspannplatte aufweist.

Spritzgießmaschinen weisen regelmäßig eine bewegbare und mindestens eine feststehende Werkzeugaufspannplatte auf. In Abhängigkeit von dem Antrieb können sogenannte Zweiplattenmaschinen zum Einsatz kommen, es kann aber auch der Antrieb sich auf einer dritten Hilfsplatte abstützen.

Werden holmlose Zweiplattenmaschinen eingesetzt, so ist im wesentlichen die Formparallelität, d.h. also die Zuordnung der Werkzeugspannplatten zu berücksichtigen. Aus DE 43 08 962 A1 ist eine Spritzgießmaschine bekannt, bei der Kraftübertragungselemente als gesonderte, durch die Kräfte verformbare Verformungselemente in Form von Bügeln ausgebildet sind und die Abstützplatte am Maschinenfuß in Schließrichtung beweglich gelagert ist.

Diese Maschinen unterliegen insbesondere durch die Verformungen einem hohen Verschleiß mit nicht ausreichender Lebensdauer. Außerdem ist die Verformung kraftabhängig und die Formparallelität damit nicht immer gegeben.

Aus der EP-A-0 554 068 ist eine Spritzgießmaschine bekannt, bei der eine Schließeinrichtung vorgesehen ist, bei der die feste und die bewegliche Werkzeugaufspannplatte über Bügel miteinander verbunden sind und die Krafteinleitung durch die Maschinenhauptachse geführt wird.

Bei Einsatz eines Kniehebelantriebs für die Schließeinrichtung kommt als dritte Platte eine Abstützplatte zum Einsatz.

Die Erfindung hat sich das Ziel gesetzt, mit einfachen Mitteln ein verschleißarmes und sicheres Schließen der Form zu gewährleisten und dabei ein hohes Maß an Parallelität der Formhälften zu gewährleisten.

Die Erfindung erreicht dieses Ziel durch die kennzeichnenden Merkmale des Anspruchs 1. Die weiteren Ansprüche zeigen vorteilhafte Weiterbildungen der Erfindung.

Die Werkzeugschließeinrichtung besitzt dabei mindestens ein Kniehebelpaar, welches ein erstes Pleuel aufweist, das mit der festen Werkzeugaufspannplatte verbunden ist, und ein zweites Pleuel, welches mit der beweglichen Werkzeugaufspannplatte schwenkbar verbunden ist. Weiterhin ist eine Antriebseinheit vorgesehen, die mindestens mit einem Bauteil des Kniehebelpaares zum Öffnen und Schließen der Form in Verbindung steht. Der Kniehebelantrieb ist beidendig an die Schließeinheit angeschlossen und verbindet kraftschlüssig unmittelbar die feste mit der bewegbaren Werkzeugaufspannplatte.

Hierzu kommt jeweils ein Pleuel der Kniehebelpaare zum Einsatz, das als Bügel ausgebildet ist oder eine C-förmige Gestalt besitzt.

Als Antrieb des Kniehebelpaares wird ein Drehantrieb oder eine lineare Krafteinheit eingesetzt. Diese Krafteinheit kann zwischen einem Pleuel und dem Maschinenbett bzw. der Werkzeugaufspannplatte oder aber auch zwischen beiden Pleueln angeordnet sein.

Bei dem Einsatz eines Drehantriebes wirkt dieser auf eine der mit den Pleueln verbundenen Wellen und kann sich an einer - vorzugsweise an der beweglichen - Werkzeugaufspannplatte abstützen oder auch zwischen beiden Pleueln eines Kniehebelpaares vorgesehen sein.

In einer weiteren vorteilhaften Ausgestaltung ist die Welle als Exzenter ausgebildet. Auf diese Weise kann die Schließeinheit über einen Drehantrieb oder eine lineare Antriebseinheit mit geringer Kraft zugefahren werden, während abschließend die Schließkraft durch einfaches Drehen des Exzenters aufgebracht wird. In einer anderen Ausgestaltung wird der Exzenter in der Weise angeordnet, daß in einer Schwenkbewegung eines Pleuels das Schließen der Schließeinheit einschließlich des Aufbringens der Schließkraft durchgeführt wird. In beiden aufgezeigten Einsatzfällen eines Exzenters besteht die Möglichkeit eines rein elektrischen Antriebes.

Die Exzentrizität e ist dabei abhängig von dem Gesamthub H plus Werkzeughöhe W und liegt in einem Bereich von e = 0,005 ./. 0,02 x H.

Zwischen einer Werkzeugaufspannplatte und dem Kniehebelantrieb ist in einer weiteren vorteilhaften Ausgestaltung ein Distanzierer angeordnet. Der Distanzierer ist dabei als Kolben-Zylinder-Einheit ausgestaltet, beispielsweise als Kurzhubzylinder, und dient dabei im wesentlichen zum Aufbringen der Schließkraft. In besonders einfacher Weise läßt sich die Schließkraft überwachen. Das System ist bezüglich der erforderlichen Schließkraft frei von Veränderungen aus dem Mechaniksystem, beispielsweise durch Verschleiß oder durch Längenänderungen der Pleuel, insbesondere des Bügels bzw. des die C-förmige Gestalt aufweisenden längeren Kniehebelteils.

Neben dem Distanzierer wird eine Hubeinrichtung zur Einstellung der Werkzeughöhe vorgeschlagen. Der Distanzierer kann aber auch so ausgebildet sein, daß mit ihm die Werkzeughöhen einstellbar sind und darüber hinaus die Schließkraft aufgebracht wird.

In einer weiteren Ausgestaltungsform ist eines der Pleuel unmittelbar als lineare Krafteinheit ausgestaltet. Das Kniehebelpaar ist dabei an einen Dreh- oder Linearantrieb anschließbar. Die Verbindung des Pleuels mit der Werkzeugaufspannplatte kann dabei konstruktiv besonders einfach ausgebildet werden.

Ein Beispiel der Erfindung ist in den beiliegenden Zeichnungen dargelegt, dabei zeigen:
- Figur 1a, 1b: eine Schließeinheit mit einem Bügel in Seitenansicht und Draufsicht
- Figur 2: eine Schließeinheit mit einem Distanzierer.
- Figur 3a, 3b: eine Schließeinheit mit einem Drehantrieb, einem Distanzierer und einem Werkzeughöheneinsteller inSeitenansicht und Draufsicht
- Figur 4: ein Pleuel als linearer Kraftantrieb.

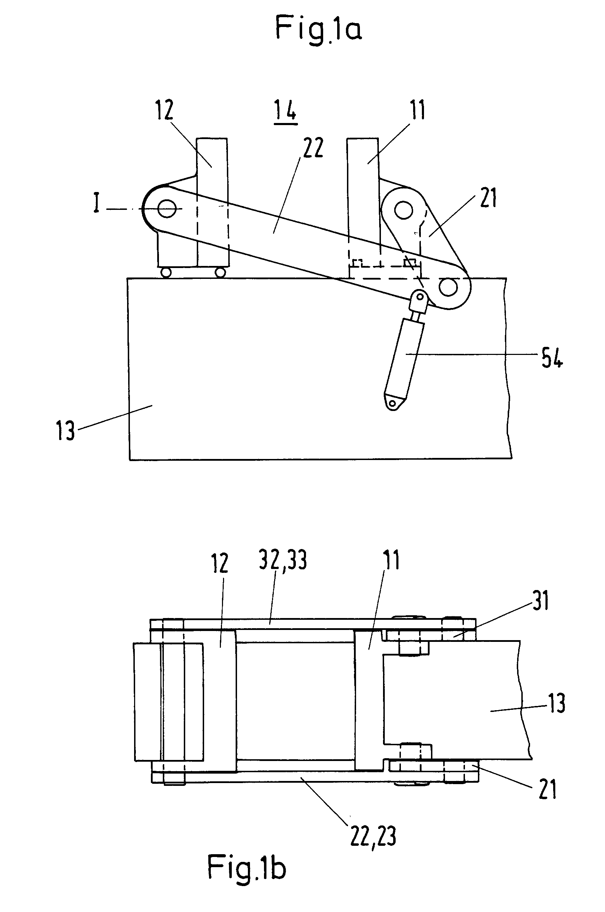

Die Figuren 1 bis 4 zeigen jeweils ein Maschinenbett 13 mit einer Werkzeugschließeinrichtung 14, die eine feststehende Werkzeugaufspannplatte 11 und eine bewegliche Werkzeugaufspannplatte 12 sowie ein Kniehebelpaar mit einem ersten Pleuel 21 und einem zweiten Pleuel 22. Soweit die Draufsichten gezeigt sind, ist noch ein zweites Kniehebelpaar mit einem ersten Pleuel 31 und einem zweiten Pleuel 32 dargestellt.

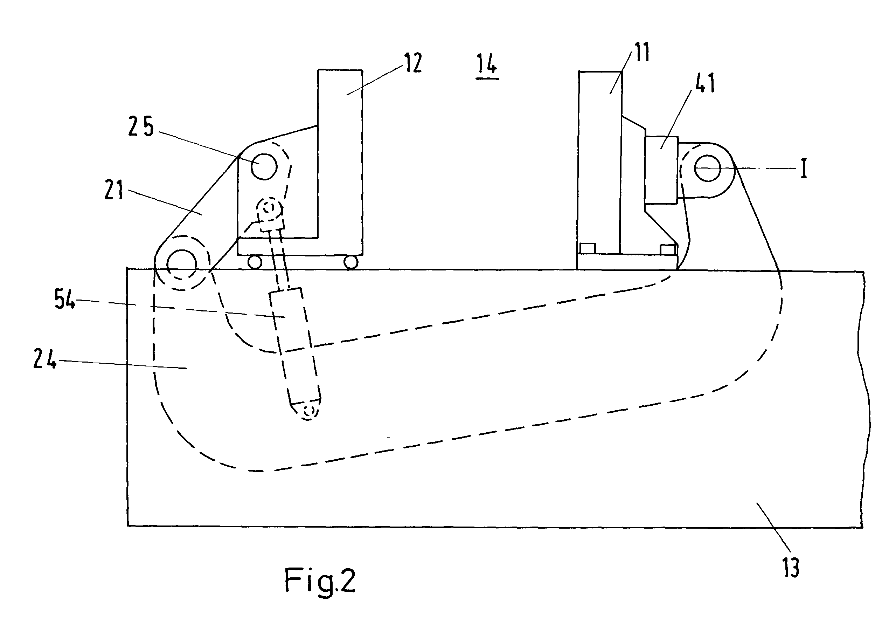

In der Figur 1 ist das erste Pleuel 21 mit der'feststehenden Werkzeugaufspannplatte 11, in den Figuren 2 bis 3 mit der beweglichen Werkzeugaufspannplatte 12 verbunden.

In der Figur 1 ist das zweite Pleuel 22,32 als Bügel 23, 33 ausgestaltet. Der Bügel 33 besitzt dabei die Grundgestalt einer Lasche mit Bolzen bzw. Wellen an den Gelenken. Der Antrieb des Kniehebelpaares ist eine Kolben-Zylinder-Einheit 54, die sich am Maschinenbett abstützt und am zweiten Pleuel 22 befestigt ist.

In der Figur 2 ist das zweite Pleuel 24 C-förmig ausgestaltet. Eine Kolben-Zylinder-Einheit 54 ist mit dem ersten Pleuel 21 verbunden.

Zwischen der feststehenden Werkzeugaufspannplatte 11 und dem zweiten Pleuel 24 ist ein Distanzierer 41 angeordnet, hier als Kurzhubzylinder ausgestaltet, wobei die hydraulische Antriebseinrichtung nicht dargestellt ist.

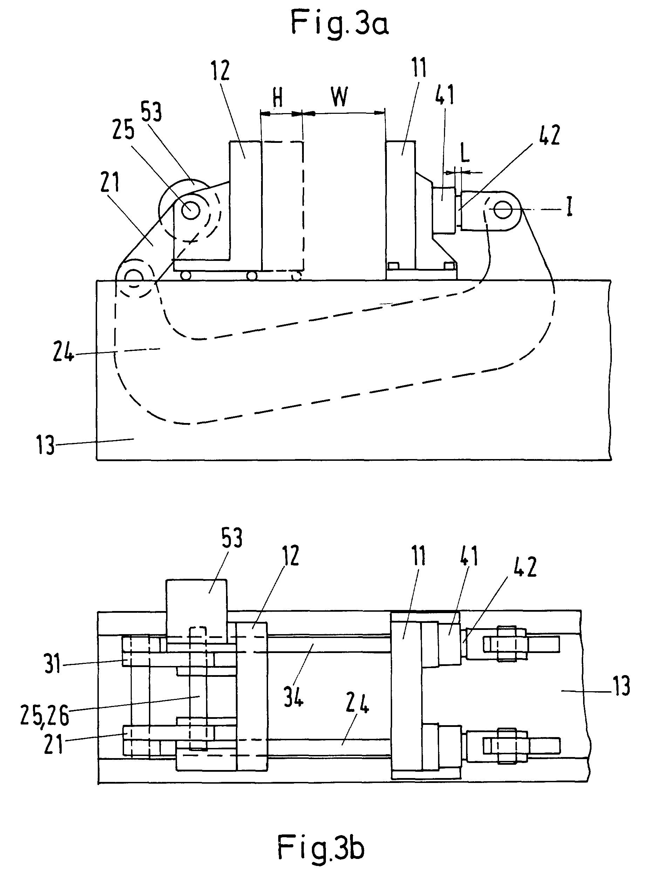

In der Figur 3 ist zwischen dem zweiten Pleuel 24 und der feststehenden Werkzeugaufspannplatte 11 neben dem Distanzierer 41 noch eine Hubeinrichtung 42 zur Einstellung der Werkzeughöhen angeordnet.

In der Figur 3 kommt als Antriebseinheit ein Drehantrieb 53 zum Einsatz, der über eine Welle 25 mit dem ersten Pleuel 21 verbunden ist.

Im oberen Teil der Figur ist der Gesamthub H dargestellt, der als Basismaß für eine Exzentrizität e beim Einsatz der Welle 25 als Exzenter 26 dient. Nicht weiter im Detail dargestellt ist der Exzenter 26, der mit dem Drehantrieb 53 verbunden ist. Beim Einsatz des Exzenters 26 kann auf den Distanzierer 41 verzichtet werden.

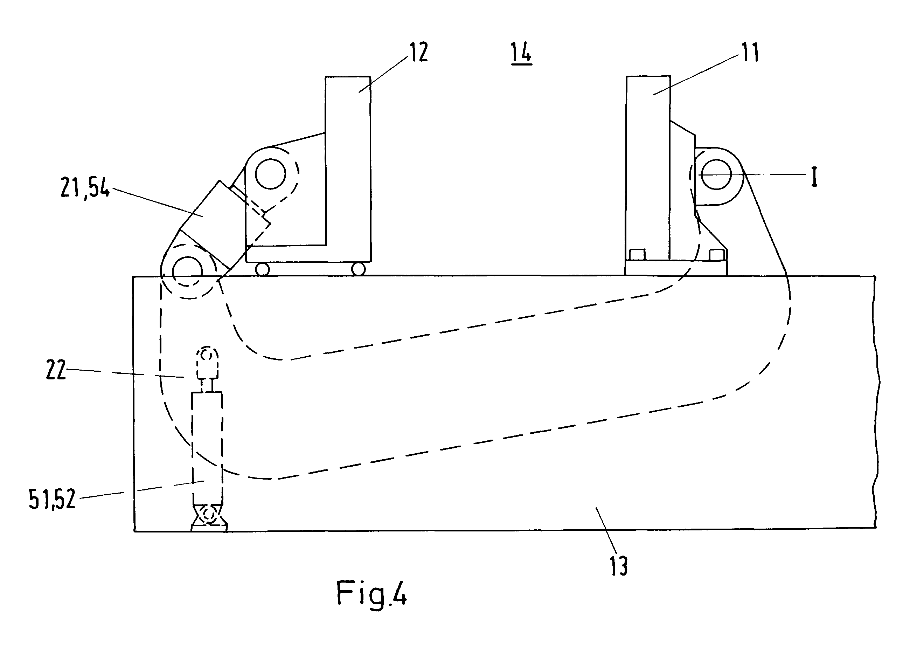

In der Figur 4 ist als Antriebseinheit eine lineare Krafteinheit 51 in Form einer Spindel 52 gewählt worden.

Das erste Pleuel 21 ist als Kolben-Zylinder-Einheit 54 ausgestaltet. In besonders einfacher Weise läßt sich hierbei die gelenkige Verbindung zwischen dem zweiten Pleuel 24 und der feststehenden Werkzeugaufspannplatte 11 konstruktiv gestalten.

### Positionsliste

### Spritzgießmaschine

- 11: Feststehende Werkzeugaufspannplatte
- 12: Bewegliche Werkzeugaufspannplatte
- 13: Maschinenbett
- 14: Werkzeugschließeinrichtung

### Erstes Kniehebelpaar

- 21: Erstes Pleuel
- 22: Zweites Pleuel
- 23: Bügel
- 24: C-förmiges Pleuel
- 25: Welle
- 26: Exzenter

### Zweites Kniehebelpaar

- 31: Erstes Pleuel
- 32: Zweites Pleuel
- 33: Bügel
- 34: C-förmiges Pleuel

### Distanziereinrichtung

- 41: Distanzierer
- 42: Hubeinrichtung

### Antriebseinheit

- 51: Lineare Krafteinheit
- 52: Spindel
- 53: Drehantrieb
- 54: Kolben-Zylinder-Einheit
- I: Mittenachse
- L: Länge
- H: Gesamthub
- W: Werkzeughöhe

## Patentansprüche

1. Spritzgießmaschine mit einer Werkzeugschließeinheit, die eine feste und eine von einem Kniehebel getriebene und bewegbare Werkzeugaufspannplatte aufweist,
dadurch gekennzeichnet,
daß die Werkzeugschließeinrichtung (14) mindestens ein Kniehebelpaar (21, 22) besitzt, dessen erstes Pleuel (21) mit der festen Werkzeugaufspannplatte (11) und dessen zweites Pleuel (22) mit der bewegbaren Werkzeugaufspannplatte (12) schwenkbar verbunden ist und
daß eine Antriebseinheit (51, 52, 54) vorgesehen ist, die mit einem der Pleuel des Kniehebelpaares (21, 22) zum Öffnen und Schließen der Form verbunden ist.

2. Spritzgießmaschine nach Anspruch 1,
dadurch gekennzeichnet,
daß mindestens eines der Pleuel (21, 22) C-förmig (24) gestaltet ist und die Werkzeugaufspannplatten (11 oder 12) umgreift und bis in den Bereich der Mittenachse (I) geführt ist.

3. Spritzgießmaschine nach Anspruch 1,
dadurch gekennzeichnet,
daß ein Pleuel (21, 31) als Bügel (23) ausgebildet ist, die die feste (11) und die bewegbare (12) Werkzeugaufspannplatte umgreift.

4. Spritzgießmaschine nach einem der o.g. Ansprüche,
dadurch gekennzeichnet,
daß zwischen dem Kopfende eines Pleuels (21, 22) und einer Werkzeugaufspannplatte (11, 12) ein in seiner Länge verstellbarer Distanzierer (41) angeordnet ist.

5. Spritzgießmaschine nach Anspruch 4,
dadurch gekennzeichnet,
daß der Distanzierer (41) hydraulisch oder elektrisch antreibbar ist und in einer Länge (L) verstellbar ist, die mindestens für den Schließkraftaufbau erforderlich ist.

6. Spritzgießmaschine nach Anspruch 5 oder 1,
dadurch gekennzeichnet,
daß eine Hubeinrichtung (42) vorgesehen ist, die mit einem der Pleuel (21, 22) und einer der Werkzeugaufspannplatten (11, 12) verbunden ist, und Bauteile enthält, über die die Werkzeughöhe (W) einstellbar ist.

7. Spritzgießmaschine nach Anspruch 6,
dadurch gekennzeichnet,
daß der Distanzierer (41) und die Hubeinrichtung (42) baulich und funktional eine Einheit bilden.

8. Spritzgießmaschine nach einem der vorbezeichneten Ansprüche,
dadurch gekennzeichnet,
daß die Antriebseinheit ein Drehantrieb (53) ist, der an eine mit einem der Pleuel (21, 22) verbundenen Welle (25) angeschlossen ist, z.B. ein einen Elektromotor aufweisender Drehantrieb.

9. Spritzgießmaschine nach einem der vorhergehenden Ansprüche,
dadurch gekennzeichnet,
daß die Antriebseinheit eine mit mit einem der Pleuel (21, 22) verbundene linear bewegbare Krafteinheit (51) ist, z.B. eine hydraulische Kolben-Zylinder-Einheit (54) oder eine elektrisch bewegbare Spindel (52).

10. Spritzgießmaschine nach einem der vorhergehenden Ansprüche,
dadurch gekennzeichnet,
daß eine der Pleuelwellen (25) als Exzenter (26) ausgestaltet und mit einem Drehantrieb (53) verbunden ist.

## Claims

1. An injection moulding machine with a mould clamping unit, which comprises a fixed platen and a moving platen driven by means of a toggle,
characterised in that
the mould clamping apparatus (14) comprises at least one toggle pair (21, 22), of which the first lever arm (21) and the second lever arm (22) are connected swivellably with the fixed platen (11) and the moving platen (12) respectively and
in that a drive unit (51, 52, 54) is provided which is connected with one of the lever arms of the toggle pair (21, 22) for opening and closing the mould.

2. An injection moulding machine according to claim 1,
characterised in that
at least one of the lever arms (21, 22) is C-shaped (24) and encompasses the platens (11 or 12) and is extended into the region of the central axis (I).

3. An injection moulding machine according to claim 1,
characterised in that
one lever arm (21, 31) takes the form of a bow (23) which encompasses the fixed (11) and the moving (12) platen.

4. An injection moulding machine according to one of the above claims,
characterised in that
a length-adjustable spacer (41) is arranged between the head end of a lever arm (21, 22) and a platen (11, 12).

5. An injection moulding machine according to claim 4,
characterised in that
the spacer (41) may be driven hydraulically or electrically and is adjustable by a length (L), which is necessary at least for clamping force build-up.

6. An injection moulding machine according to claim 5 or claim 1,
characterised in that
a lifting device (42) is provided, which is connected with one of the lever arms (21, 22) and one of the platens (11, 12) and contains components by means of which the mould height (W) may be adjusted.

7. An injection moulding machine according to claim 6,
characterised in that
the spacer (41) and the lifting device (42) form a structural and functional unit.

8. An injection moulding machine according to one of the above claims,
characterised in that
the drive unit is a rotary actuator (53), which is attached to a shaft (25) connected with one of the lever arms (21, 22), e.g. a rotary actuator comprising an electric motor.

9. An injection moulding machine according to one of the preceding claims,
characterised in that
the drive unit is a linearly movable force unit (51) connected with one of the lever arms (21, 22), e.g. a hydraulic piston/cylinder unit (54) or an electrically movable spindle (52).

10. An injection moulding machine according to one of the preceding claims,
characterised in that
one of the lever arm shafts (25) takes the form of an eccentric (26) and is connected with a rotary actuator (53).

## Revendications

1. Machine de coulée par injection comportant une unité de fermeture d'outil, qui présente une plaque de serrage d'outil fixe et une plaque de serrage d'outil mobile et actionnée par un levier coudé,
caractérisée en ce que le dispositif de fermeture d'outil (14) possède au moins une paire de leviers coudés (21, 22), dont la première bielle (21) est reliée de façon pivotante à la plaque de serrage d'outil fixe (11) et dont la seconde bielle (22) est reliée de façon pivotante à la plaque de serrage d'outil mobile (12), et en ce qu'il est prévu une unité d'entraînement (51, 52, 54), qui est reliée à une des bielles de la paire de leviers coudés (21, 22) pour ouvrir et fermer le moule.

2. Machine de coulée par injection selon la revendication 1,
caractérisée en ce qu'au moins une des bielles (21, 22) est réalisée en forme de C (24) et entoure les plaques de serrage d'outil (11 ou 12) et est guidée jusque dans la zone de l'axe central (I).

3. Machine de coulée par injection selon la revendication 1,
caractérisée en ce qu'une bielle (21, 31) est réalisée comme étrier (23) qui entoure la plaque de serrage d'outil fixe (11) et la plaque de serrage d'outil mobile (12).

4. Machine de coulée par injection selon une des revendications précédentes,
caractérisée en ce que, entre l'extrémité de tête d'une bielle (21, 22) et une plaque de serrage d'outil (11, 12), il est agencé un écarteur (41) de longueur réglable.

5. Machine de coulée par injection selon la revendication 4,
caractérisée en ce que l'écarteur (4) peut être entraîné de façon hydraulique ou électrique et est réglable à une longueur (L) qui est au moins nécessaire pour engendrer la force de fermeture.

6. Machine de coulée par injection selon la revendication 5 ou 1,
caractérisée en ce qu'un dispositif de levage (42) est prévu, qui est relié à une des bielles (21, 22) et à une des plaques de serrage d'outil (11, 12), et comporte des pièces grâce auxquelles la hauteur de l'outil (W) est réglable.

7. Machine de coulée par injection selon la revendication 6,
caractérisée en ce que l'écarteur (41) et le dispositif de levage (42) forment, au niveau constructif et fonctionnel, une unité.

8. Machine de coulée par injection selon une des revendications précédentes,
caractérisée en ce que l'unité d'entraînement est un entraînement en rotation (53), qui est raccordé à un arbre (25) relié à une des bielles (21, 22), par exemple un entraînement en rotation présentant un moteur électrique.

9. Machine de coulée par injection selon une des revendications précédentes,
caractérisée en ce que l'unité d'entraînement est une unité de force (51) linéairement mobile, reliée à une des bielles (21, 22), par exemple un vérin hydraulique (54) ou un axe (52) électriquement déplaçable.

10. Machine de coulée par injection selon une des revendications précédentes,
caractérisée en ce qu'un des arbres de bielle (25) est réalisé comme excentrique (26) et est relié à un entraînement en rotation (53).
